# EUROPEAN PATENT SPECIFICATION

(11) **EP 2 373 106 B1**
(45) Date of publication and mention of the grant of the patent: **31.12.2014**
(21) Application number: 09837327.7
(22) Date of filing: 21.10.2009
(51) Int. Cl.: H04W 72/04, H04L 5/00

(54) **RESOURCE MAPPING METHODS FOR CONTROL CHANNELS**
RESSOURCENZUORNDUNGSVERFAHREN FÜR STEUERKANÄLE
PROCÉDÉS DE MAPPAGE DE RESSOURCES POUR DES CANAUX DE COMMANDE

(30) Priority: 07.01.2009 CN 200910001826
(43) Date of publication of application: 05.10.2011
(73) Proprietor: ZTE Corporation, Shenzhen, Guangdong 518057 (CN)
(72) Inventor: GUAN, Yanfeng, Guangdong 518057 (CN); LIU, Xiangyu, Guangdong 518057 (CN); LIU, Ying, Guangdong 518057 (CN)
(74) Representative: UEXKÜLL & STOLBERG
(86) International application number: PCT/CN2009/074544
(87) International publication number: WO 2010/078770

(56) References cited:
- EP-A1- 1 175 032
- EP-A2- 1 819 069
- CN-A- 101 228 727
- US-A1- 2007 165 731
- US-A1- 2007 165 731
- MARK CUDAK ET AL.: "Proposed Text of UL PHY Structure for the IEEE 802.16m endment.", IEEE 802.16 BROADBAND WIRELESS ACCESS WORKING GROUP (IEEE 802.16M-08/1442)., vol. 4, 4 November 2008 (2008-11-04), pages 1-19, XP008151418,
- MARK CUDAK ET AL.: 'Proposed Text of UL PHY Structure for the IEEE 802.16m amendment' IEEE 802.16 BROADBAND WIRELESS ACCESS WORKING GROUP (IEEE 802.16M-08/1442). vol. 4, 04 November 2008, pages 6 - 7, XP008151418

## Description

### TECHNICAL FIELD

The invention relates to the field of communications, and in particular, to resource mapping methods for control channels.

### BACKGROUND

In a wireless communication system, a base station is a device providing service for a terminal, which performs communication with the terminal through an uplink/downlink, wherein the downlink refers to the link from a base station to a terminal, and the uplink refers to the link from a terminal to a base station. As for data transmission, a plurality of terminals can simultaneously send data to the base station through the uplink and also can simultaneously receive the data from the base station through the downlink. In a wireless communication system for realizing radio resource dispatching and control via a base station, the dispatching and allocation of the radio resources in a system is finished by the base station. For example, the base station provides downlink resource allocation information required when the base station performs downlink transmission and uplink resource allocation information required when the terminal performs uplink transmission. The resource allocation information includes actual location of physical resources, a transmission method and other information, and as for a communication system realized based on different technologies, the requirements and methods for resource allocation and resource mapping are different.

In a wireless communication system based on an Orthogonal Frequency Division Multiple Access (OFDMA) technology, mapping and allocation of radio resources are finished by a base station. The OFDMA technology is realized based on an Orthogonal Frequency Division Multiplexing (OFDM) technology, the realizing process of which mainly comprises the following steps: sub-channelizing available subcarriers, then performing data transmission on the subcarriers and finally, realizing multiple access by users through occupying different subcarriers. For example, the base station respectively determines system configuration and resource allocation information during downlink transmission from the base station to the terminal and system configuration and resource allocation information during uplink transmission from the terminal to the base station, wherein both the system configuration and resource allocation information during the downlink transmission and the system configuration and resource allocation information during the uplink transmission are referred to as system configuration and resource allocation information, the base station sends the system configuration and resource allocation information to the terminal over a control channel, and the terminal receives the system configuration and resource allocation information on a determined control channel and then communicates with the base station through the system configuration and resource allocation information, i.e., data receiving and data sending are performed between the terminal and the base station.

A control channel in the wireless communication system is described as follows:
In the wireless communication system, a Control Channel (CCH) is mainly classified as a Synchronization Channel (SCH), a Broadcast Control Channel (BCCH), a unicast control channel and a multicast control channel. Wherein the SCH is a "point-to-multipoint" unilateral control channel, and a terminal realizes synchronous operation with a base station by using the SCH. The BCCH is also called a Broadcast Channel (BCH) for short on the premise of being defaulted as the discussed control channel, and similar to the SCH, the BCH (or BCCH) is also a "point-to-multipoint" unilateral control channel and mainly used for transmitting or broadcasting control information to a plurality of terminals by a base station. Because a broadcast control channel usually transmits important system configuration and control information, compared with the common data transmission, the broadcast control channel is required to have the characteristics of high stabilization and a low error rate. However, since the present radio spectrum resources are becoming scarcer, the radio channel environment is worsening, the broadcast control channel generally adopts a lower-loss modulating coding method for resisting the bad channel environment so as to obtain a lower bit error rate, but more radio resources will be thus consumed.

Further, in the wireless communication system based on the OFDMA technology, the radio resources are two-dimensional time-frequency resources including time-domain OFDM symbols and frequency-domain subcarriers, and as for the design for a control channel, particularly for the design for a physical structure, it is still necessary to think about the limitation to resource mapping and interference suppression in the OFDMA system. Because the system based on the OFDMA technology belongs to a multicarrier system, the problem of resource mapping in the frequency domain is required to be considered during the resource mapping process of the multicarrier resources, which makes big differences exist between the mapping process of multicarrier resources and the mapping process of single-carrier resources, thus a method of a control channel occupying resources in the OFDMA system is required to conform to the design for resource mapping in the OFDMA system. In addition, the interference problem is also an important conundrum which restricts the communication development, the OFDMA system can adopt a Fractional Frequency Reuse (FFR) technology to suppress interference, and the design for a control channel is required to conform to the requirements of the FFR technology.

It can be seen that the requirements for the present control channel are a low bit error rate, resource mapping and interference suppression in the OFDMA system and so on, however, the technical solution that enables the control channel to meet the above requirements and improves the application performance of the control channel has not been provided so far.

EP1819069A2, August 15, 2007, discloses a method for transmitting/receiving a Broadcast Channel (BCH), comprising: identifying a system bandwidth of a cell by comparing the system bandwidth with reception bandwidths of the UEs within the cell, mapping two BCH information blocks including system information to a central band having a bandwidth equal to a transmission bandwidth of the BCH, additionally mapping at least one of the information blocks into each of one-half bands of the system bands, when the system bandwidth is two times an amount of the reception bandwidth, and transmitting a frequency domain signal, to which the information blocks are mapped, to the UEs located within the cell.

US200716573A1, July 19, 2007, discloses a method for conveying control channel information in OFDM system, which can mitigate interference between the control channel signaling of adjacent sectors/cells, in which, a transmitting device transmits primary control channel information to a plurality of user devices, the primary control channel information includes an indication that a first OFDMA resource region is assigned to at least one user device of the plurality of user devices. The transmitting device corresponding transmits secondary control channel information to the at least one user device using the first OFDMA resource region,

EP1175032A1, January 23, 2002, discloses a single carrier/DS-CDMA packet transmission method wherein a predetermined time slot is assigned to reservation demand packet transmission in regard to a spreading code, and the reservation demand packet and data packets are time-multiplexed for transmission.

### SUMMARY

Considering the requirements for a control channel in related technologies, such as a low bit error rate, resource mapping and interference suppression in the OFDMA system and so on, the present invention mainly aims to provide a resource mapping method and device for a control channel to solve at least one of the above problems.

In accordance with one aspect of the present invention, the present invention provides a resource mapping method for a control channel.

A resource mapping method for a control channel in accordance with the present invention comprises: the number of all physical resource units is n, k physical resource units in the n physical resource units form a frequency partition or a plurality of frequency partitions, and the part or all of physical resource units in said k physical resource units in said frequency partition(s) are mapped into distributed resource units, wherein n is greater than or equal to k; locating a broadcast control channel in said one or a plurality of frequency partitions, wherein a fractional frequency reuse factor corresponding to said frequency partition is 1, 1/3 or 3; and when the fractional frequency reuse factor corresponding to said frequency partition is 1, a start position of said broadcast control channel is positioned in the first distributed resource unit of said frequency partition; when the fractional frequency reuse factor of the frequency partition is 1/3 or 3, the start position of said broadcast control channel is positioned in a first distributed resource unit of each section of said frequency partition.

Wherein said n may be determined by at least one of the following parameters: a system bandwidth and a multi-carrier frequency configuration.

Preferably, said k physical resource units may be selected in accordance with one of the following methods: contiguously extracting k physical resource units from one side of said n physical resource units; contiguously extracting k physical resource units from the middle of said n physical resource units; and contiguously extracting k physical resource units from both sides of said n physical resource units.

Wherein said k may be a fixed value; or said k may be determined by at least one of the following parameters: a system bandwidth and a multi-carrier frequency configuration.

Wherein said broadcast control channel may comprise a primary broadcast control channel and/or a secondary broadcast control channel.

Preferably, bandwidth occupied by said primary broadcast control channel may be smaller than or equal to a minimal system bandwidth; or the frequency difference between any two subcarriers occupied by said primary broadcast control channel may be smaller than or equal to the minimal system bandwidth.

Preferably, said primary broadcast control channel may occupy a fixed number of distributed resource units; or a terminal may obtain the number of distributed resource units occupied by said primary broadcast control channel through blind detection.

Preferably, said primary broadcast control channel indicating the number of the distributed resource units occupied by said secondary broadcast control channel; or a terminal obtaining the number of distributed resource units occupied by said secondary broadcast control channel through blind detection.

Preferably, the distributed resource units occupied by said primary broadcast control channel being adjacent or nonadjacent to the distributed resource units occupied by said secondary broadcast control channel; if said distributed resource units occupied by said primary broadcast control channel are nonadjacent to said distributed resource units occupied by said secondary broadcast control channel, location information of said distributed resource units occupied by said secondary broadcast control channel is indicated via said primary broadcast control channel.

Preferably, utilizing the resources which are not used for transmitting said primary broadcast control channel and/or said secondary broadcast control channel in said frequency partition to transmit data; or utilizing the resources which are used for transmitting said primary broadcast control channel and/or said secondary broadcast control channel in said frequency partition to transmit data.

Further, the above method may further comprise: said primary broadcast control channel indicates the number and/or the location of distributed resource units occupied by said secondary broadcast control channel ; or a terminal obtains the number and/or the location of distributed resource units occupied by said secondary broadcast control channel through blind detection.

Preferably, configuration information of said multiple frequency partitions is definite, and the location of said broadcast control channel is determined in accordance with said configuration information, wherein said configuration information includes at least one of the following: a number of said frequency partitions, a size of each frequency partition, a number of subbands in each frequency partition, a number of minibands in each frequency partition, a number of distributed resource units in each frequency partition and the number of contiguous resource units in each frequency partition.

Through at least one of the above technical solutions of the present invention, resource mapping methods for control channels in the OFDMA system are provided by the present invention, solving the problems of resources locations occupied by the control channels and the manner thereof, improving the performance of the control channels, enabling the control channels to meet various requirements in related technologies, such as a low bit error rate, resource mapping and interference suppression in the OFDMA system and so on, and ensuring the spectrum efficiency of the wireless communication system based on the OFDMA technology.

### BRIEF DESCRIPTION OF THE DRAWINGS

The drawings are used to provide further understanding to this invention, constitute one part of the specification, explain this invention together with embodiments of this invention and do not constitute limitations to it. In the drawings:
Fig. 1 is a diagram illustrating a frame structure of a wireless communication system in accordance with related technologies;
Fig. 2 is a diagram illustrating a resource structure of a wireless communication system in accordance with related technologies;
Fig. 3 is a flowchart illustrating a resource mapping method for a control channel in accordance with Method Embodiment 1 of the present invention;
Fig. 4 is a diagram illustrating a resource mapping process of a broadcast control channel which occupies one frequency partition in an OFDMA/5MHz system in accordance with Method Embodiment 1 of the present invention;
Fig. 5 is a flowchart illustrating a resource mapping method for a control channel in accordance with Method Embodiment 2 of the present invention;
Fig. 6 is a diagram illustrating a resource mapping process of a broadcast control channel which occupies two frequency partitions in an OFDMA/5MHz system in accordance with Method Embodiment 2 of the present invention;
Fig. 7 is a diagram illustrating a resource mapping process of a broadcast control channel which occupies three frequency partitions in an OFDMA/5MHz system in accordance with Method Embodiment 2 of the present invention;
Fig. 8 is a diagram illustrating a resource mapping process of a broadcast control channel which occupies four frequency partitions in an OFDMA/5MHz system in accordance with Method Embodiment 2 of the present invention;
Fig. 9 is a flowchart illustrating a resource mapping method for a control channel in accordance with Method Embodiment 3 of the present invention;
Fig. 10 is a diagram illustrating a mapping process of a broadcast control channel occupying a predetermined resource unit in an OFDMA/5MHz system in accordance with Method Embodiment 3 of the present invention;
Fig. 11 is a diagram illustrating a mapping process of a broadcast control channel occupying a predetermined partition in an OFDMA/5MHz system in accordance with Method Embodiment 3 of the present invention;
Fig. 12 is a flowchart illustrating a resource mapping method for a control channel in accordance with Method Embodiment 4 of the present invention;
Fig. 13 is a diagram illustrating a mapping process of a primary synchronization channel in an OFDMA/10MHz system in accordance with Method Embodiment 4 of the present invention; and
Fig. 14 is a diagram illustrating a mapping process of a secondary synchronization channel in an OFDMA/10MHz system in accordance with Method Embodiment 4 of the present invention.

### DETAILED DESCRIPTION

### Function Overview

Before describing the embodiments of the present invention, a resource mapping process in the OFDMA technology is brifly described first. It is necessary to state that the embodiments of the present invention are described taking the OFDMA technolog as an example, but the present invention is not limited to this, and similarly, the present invention can be applied to systems such as a Long Term Evolution (LTE) system, Institute for Electrical and Electronic Engineers (IEEE) 802.16m and other multi-carrier systems as well as other possible multi-carrier systems in the future.

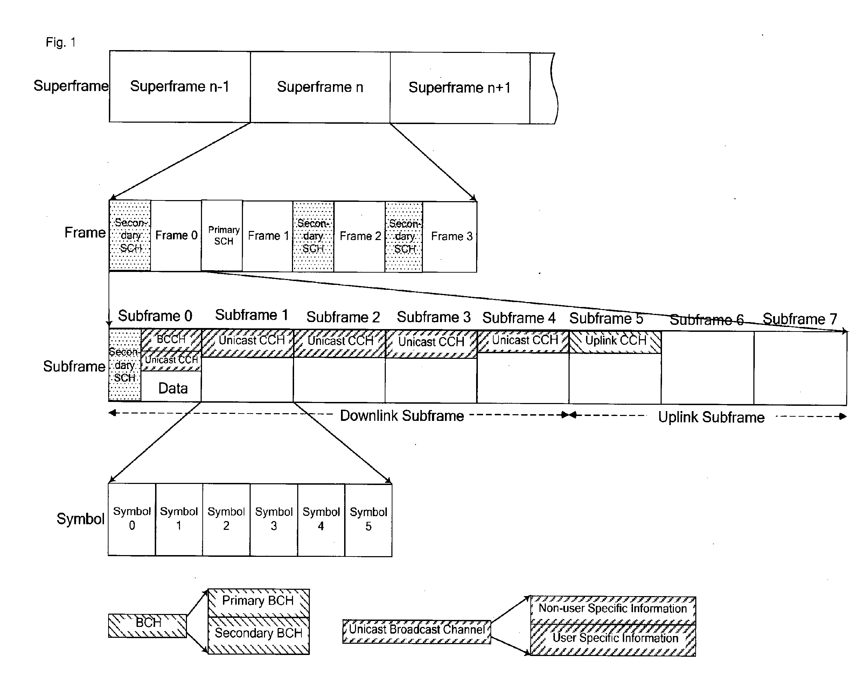

In the wireless communicaiton system based on the OFDMA technology, the resoruce mapping process may mean a process of mapping physical resources (for example, physical subcarriers) into logical resources (for example, logical resource units), for example, mapping physical subcarriers into logical resource blocks, in this way, a base station can realize the dispatch of the radio resources through dispatching the logical resource blocks. The resource mapping is maily based on the frame structure and the resource structure of the OFDMA system. In the frame structure, the radio resoruces are dispatched after being partitioned into units at different grades in the time domain, such as super frames, frames, subframes, and symbols, etc. For example, as shown in Fig. 1, the radio resources are partitioned into super frames, wherein each super frame includes 4 frames, each frame also includes 8 subframes, each subframe includes 6 basic OFDM symbols, and an actual communication system determines the concrete number of OFDM symbols included in each grade unit in the frame structure in accordance with factors such as system bandwidth, a coverage area, the length of a cyclic prefix and an uplink to downlink conversion interval which are required to be supported and so on. In addition, as shown in Fig. 1, a broadcast control channel is located in the first subframe in the head part of the super frame, therefore, it is also called a Superframe Head (SFH), and the broadcast control channel comprises a primary broadcast control channel and/or a secondary broadcast control channel, equivalently, the superframe head comprises a prime super frame head and a secondary super frame head; a synchronization channel comprises a primary synchronization channel and/or a secondary synchronization channel, wherein the primary synchronization channel and the secondary synchronization channel are respectively located in the first OFDM symbols of different frames.

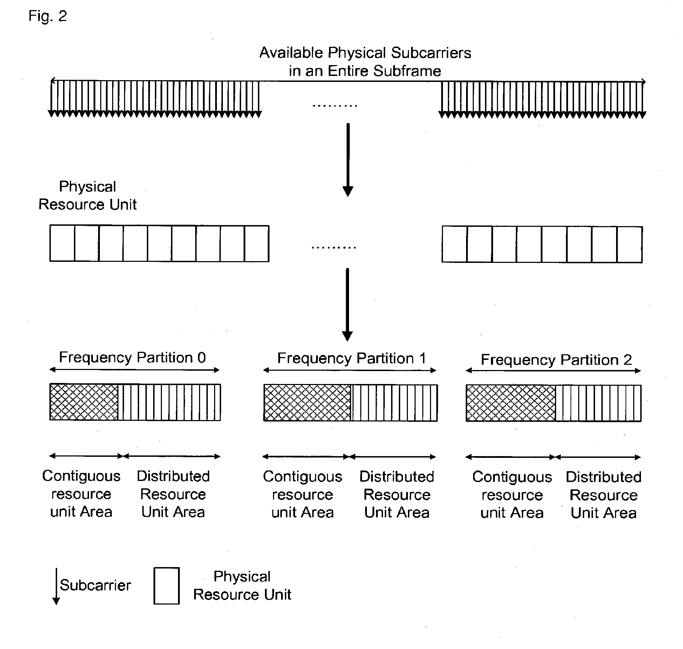

An available frequency band is divided into a plurality of frequency partitions in the frequency domain via the resource structure in accordance with factors such as a coverage area, FFR operation, the velocity at a terminal and service types which are required to be supported and so on, and then the frequency resources in the frequency partitions are further divided into contiguous resource areas and/or distributed resource areas for dispatching. As shown in Fig. 2, available subcarriers of a subframe are divided into 3 frequency partitions, wherein each frequency partition is divided into a contiguous resource area and a distributed resource area to realize the flexibility of dispatching, and the available subcarriers of a subframe also can be divided into one, two, three, four or more frequency partitions as required, and there are no limits to this.

In the following embodiments, if no otherwise specified, both n and k are integers greater than or equal to 1 as well as n is greater than or equal to k. The distributed resource area means that the physical resource units therein are all mapped into Distributed Resource Units (DRU), and the subcarriers included in the DRU are fully discontiguous or are contiguous in pairs, or every four subcarriers are contiguous; the contiguous resource area means that the physical resource units therein are all mapped into Contiguous Resource Units (CRUs), the subcarriers included in the CRU are contiguous, and the CRU is also called a Localized Resource Unit (LLRU). The mapped resource units are not physical but logical resource units, thus the DRU is a Distributed Logical Resource Unit (DLRU) or a Logical Distributed Resource Unit (LDRU), and the CRU is a Contiguous Logical Resource Unit (CLRU) or a Logical Contiguous Resource Unit (LCRU). If no contradiction would be brought about, they are respectively called a DRU and a CRU for short. In addition, it is necessary to explain that the control channel described hereafter includes but is not limited to: a synchronization channel and a broadcast control channel.

Based on this, the present invention provides a resource mapping solution for a control channel in the OFDMA system in accordance with the characteristics of the frame structure (for example, the frame structure shown in Fig. 1) and the resource structure (for example, the resource structure shown in Fig. 2) in the OFDMA technology, and with the purpose of solving the problem of the balance between performance and resources existing in the design for a control channel, so as to ensure the spectrum efficiency of the wireless communication system based on OFDMA.

When there is no conflict, the embodiments in this application and the characteristics in the embodiments can be combined with each other.

The preferred embodiments of the present invention are illustrated by combining the following drawings, it should be understood that the preferred embodiments are only used for describing and explaining this invention rather than limiting it.

### Method Embodiment 1

In accordance with the embodiment of the present invention, a resource mapping method for a control channel is provided.

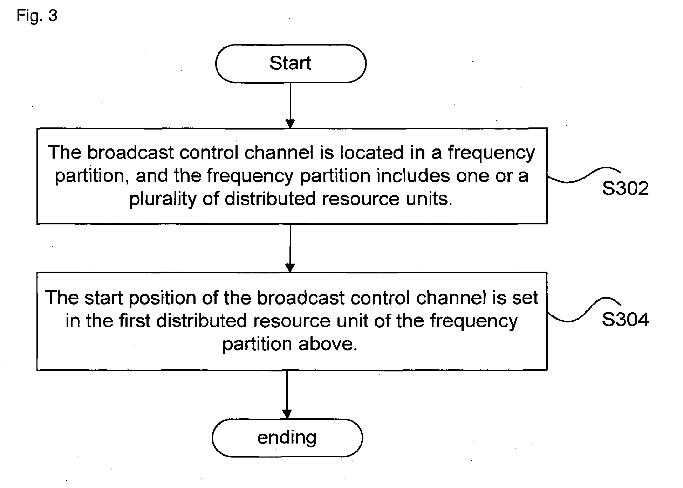

Fig. 3 is a flowchart illustrating a resource mapping method for a control channel in accordance with the embodiment of the present invention, it is necessary to explain that for convenient description, the technical solution in the method embodiment of the present invention is shown and described in Fig. 3 in a manner of steps, and the steps shown in Fig. 3 can be implemented in such a computer system with a group of instructions executable by computers. Although a logic sequence is shown in Fig. 3, under some circumstances, the illustrated or described steps can be implemented following a different sequence. As shown in Fig. 3, the method comprises the following steps (S302 to S304).

In S302, a broadcast control channel is located in a frequency partition, i.e., it is located in a frequency partition, wherein said frequency partition includes one or a plurality of distributed resource units, a frequency reuse factor of said frequency partition can be 1, 1/3 or 3, wherein configuration information of said frequency partition is definite (i.e., said frequency partition has definite configuration information, said configuration information is predefined, and a terminal obtains said configuration information in advance without notification), the location of said broadcast control channel can be determined in accordance with said configuration information, wherein said configuration information includes at least one of the following: the number of said frequency partitions, the size of said frequency partition, the number of subbands in said frequency partition, the number of minibands in said frequency partition, the number of distributed resource units in said frequency partition and the number of contiguous resource units in said frequency partition.

In S304, the start position of said broadcast control channel is set in the first distributed resource unit of said frequency partition, and physical bandwidth occupied by said broadcast control channel is smaller than or equal to minimal system bandwidth.

The above control channel comprises a primary broadcast control channel and a secondary broadcast control channel, wherein said primary broadcast control channel occupies a fixed or predetermined number of distributed resource units and indicates the number of distributed resource units occupied by said secondary broadcast control channel, wherein said distributed resource units occupied by said primary broadcast control channel can be obtained by adopting one of the following methods: said primary broadcast control channel occupies a fixed number of distributed resource units, or said terminal obtains the number of said distributed resource units occupied by said primary broadcast control channel through blind detection; said distributed resource units occupied by said secondary broadcast control channel can be obtained by adopting one of the following methods: said primary broadcast control channel indicates the number of said distributed resource units occupied by said secondary broadcast control channel, or said terminal obtains the number of said distributed resource units occupied by said secondary broadcast control channel through blind detection. For example, in a specific implementation process, said terminal can obtain said configuration information of said frequency partition in advance and determine the location of said control channel in accordance with said configuration information, then obtain a fixed or predetermined number of distributed resource units occupied by said primary broadcast control channel through blind detection and obtain the number of said distributed resource units occupied by said secondary broadcast control channel. Said primary broadcast control channel occupies a determined number of resources or the number of occupied resources can be obtained through blind detection; and the number of resources occupied by said secondary broadcast control channel is indicated via said primary broadcast control channel. For example, the amount of information required to be sent through said primary broadcast control channel is definite, and one of determined methods for modulating coding may be adopted, thus the number of occupied resources is related with an actually adopted modulating coding method, but information of the number of said resources can be obtained through blind detection and a possible modulating coding method as long as the start position of said primary broadcast control channel has been determined.

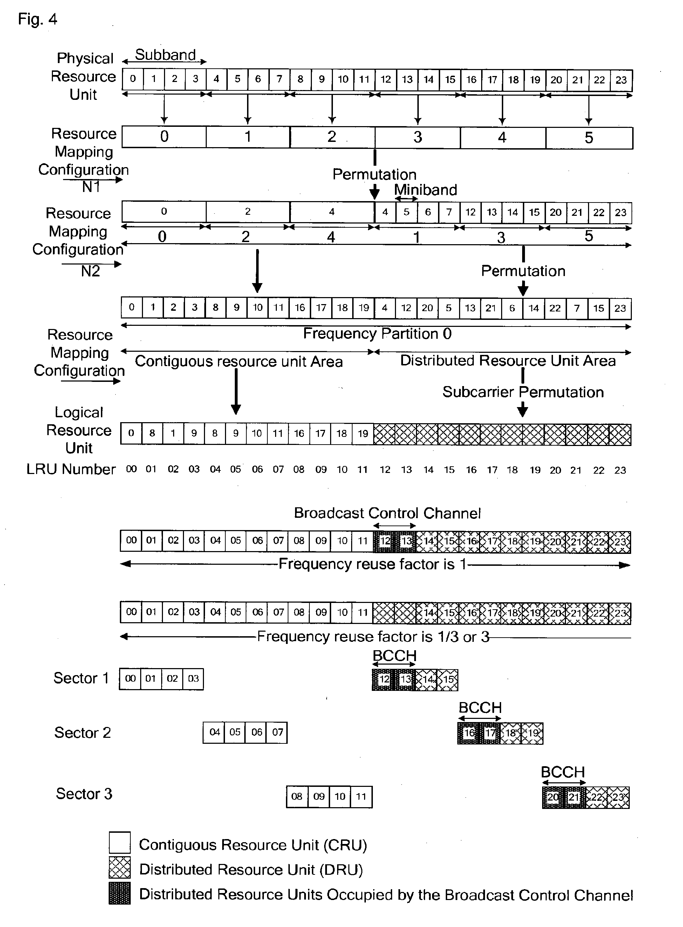

Furthermore, bandwidth occupied by said primary broadcast control channel is required to meet one of the following requirements: said bandwidth occupied by said primary broadcast control channel is smaller than or equal to minimal system bandwidth, and the frequency difference between any two subcarriers occupied by said primary broadcast control channel is smaller than or equal to said minimal system bandwidth. For example, as shown in Fig. 4, the bandwidth occupied by said broadcast control channel is smaller than minimal system bandwidth (5MHz), therefore, bandwidth occupied by said primary broadcast control channel must be smaller than said minimal system bandwidth (5MHz).

In addition, said distributed resource units occupied by said primary broadcast control channel can be adjacent or nonadjacent to said distributed resource units occupied by said secondary broadcast control channel, wherein if said distributed resource units occupied by said primary broadcast control channel are nonadjacent to said distributed resource units occupied by said secondary broadcast control channel, the location information of said distributed resource units occupied by said secondary broadcast control channel can be indicated on said primary broadcast control channel.

The invention provides a resource mapping method for a control channel in the OFDMA system, by locating a broadcast control channel in a distributed resource unit in one frequency partition, solving the problems of resource location occupied by a broadcast control channel and the manner thereof, improving the performance of the broadcast control channel, enabling the control channel to meet various requirements in related technologies, such as a low bit error rate, resource mapping and interference suppression in the OFDMA system and so on, simplifying the process of a terminal identifying the control channel and ensuring the spectrum efficiency of a wireless communication system based on the OFDMA technology.

### Example 1

Fig. 4 is a diagram illustrating the resource mapping process of a broadcast control channel which occupies one frequency partition in the OFDMA/5MHz system in accordance with Method Embodiment 1 of the present invention, firstly, taking Fig. 4 as an example to illustrate the process of obtaining a frequency partition in a 5MHz wireless communication system, wherein the number of Fast Fourier Transform (FFT) points of the 5MHz system are 512, the number of available subcarriers in a subframe is 432, these subcarriers are divided into 24 physical resource units in all, and the size of each physical resource unit is 18 × 6, wherein the process of obtaining said frequency partition is described as follows: firstly, said 24 physical resource units are divided into a plurality of subbands, each subband comprises N1 contiguous physical resource units, for example, if N1=4, then there are 6 subbands, and these subbands are replaced or K_{SB} subbands are extracted from these subbands at equal interval, for example, if K_{SB}=3, a determinant permutation method is adopted, and a permutation matrix is [0, 1; 2, 3; 4, 5], then the sequences before and after permutation are respectively [0, 1, 2, 3, 4, 5, 6] and [0, 2, 4, 1, 3, 5]. The rest physical resource units are divided into a plurality of minibands, each subband comprises N2 contiguous physical resource units, for example, if N1=1, then there are 12 minibands to which permutation is performed. These obtained subbands and minibands are respectively mapped to one frequency partition, then all PRUs in said frequency partition are mapped into contiguous resource units (the subcarriers in said contiguous resource units are contiguous) and distributed resource units, as shown in Fig. 3, the first 12 resource units [0, 1, 2, 3, 8, 9, 10, 11, 16, 17, 18, 19] are used as said contiguous resource units, and said distributed resource units are obtained after subcarrier replacement operation is performed to the rest 12 resource units, and the unit of said replacement is one subcarrier or a pair of subcarriers. For example, said distributed resource units obtained after said replacement are logical resource units, which therefore can be called distributed logical resource units, correspondingly, said contiguous resource units can be called contiguous logical resource units, and they can be respectively called DRUs and CRUs for short if no contradiction would be brought about. Others are similar, so no details will be given here.

As shown in Fig. 4, when a fractional frequency reuse factor of a frequency partition is 1, said broadcast control channel is located in the first and the second distributed resource units of said distributed resource units; when a fractional frequency reuse factor of the frequency partition is 1/3 or 3, said broadcast control channel occupies the first two distributed resource units of each section. The number of resource units actually used for transmitting a control channel is determined by the amount of information sent by said control channel. This example only takes occupancy of two distributed resource units for instance for description but is not limited to this.

### Method Embodiment 2

In accordance with the embodiment of the present invention, a resource mapping method for a control channel is provided.

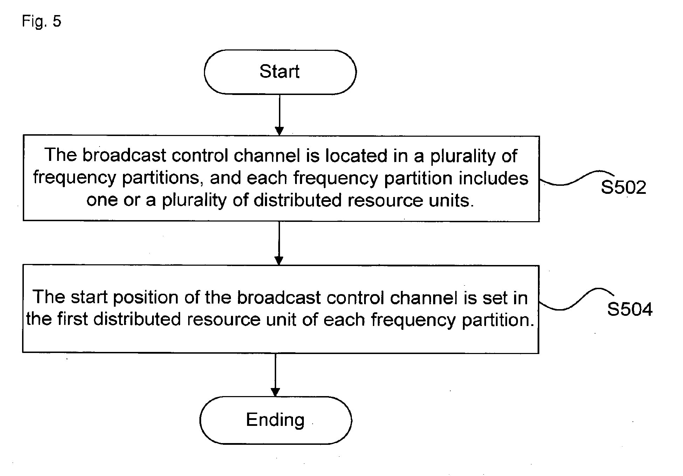

Fig. 5 is a flowchart illustrating a resource mapping method in accordance with the embodiment of the present invention, and as shown in Fig. 5, the method comprises the following steps (from S502 to S504).

In S502, a broadcast control channel is located in a plurality of frequency partitions, wherein each frequency partition comprises one or multiple distributed resource units; wherein a fractional frequency reuse factor of each frequency partition is 1/3 or 3, or in said multiple frequency partitions, a fractional frequency reuse factor of one frequency partition is 1, and fractional frequency reuse factors of the rest frequency partitions are all 1/3 or 3.

Furthermore, corresponding to each frequency partition, the configuration information of said each frequency partition is definite (i.e., one frequency partition has definite configuration information, said configuration information is predefined, and a terminal obtains said configuration information in advance without notification), the location of said broadcast control channel can be determined in accordance with said configuration information, wherein said configuration information includes at least one of the following: the number of said frequency partitions, the size of said frequency partition, the number of subbands in said frequency partition, the number of minibands in said frequency partition, the number of distributed resource units in said frequency partition and the number of contiguous resource units in said frequency partition.

In S504, the start position of said broadcast control channel is set in the first distributed resource units of the frequency partitions.

The above control channel comprises a primary broadcast control channel and a secondary broadcast control channel, wherein said primary broadcast control channel occupies a fixed or predetermined number of distributed resource units and indicates the number of distributed resource units occupied by said secondary broadcast control channel, wherein said distributed resource units occupied by said primary broadcast control channel can be obtained by adopting one of the following methods: said primary broadcast control channel occupies a fixed number of distributed resource units, or said terminal obtains the number of said distributed resource units occupied by said primary broadcast control channel through blind detection; said distributed resource units occupied by said secondary broadcast control channel can be obtained by adopting one of the following methods: said primary broadcast control channel indicates the number of said distributed resource units occupied by said secondary broadcast control channel, or said terminal obtains the number of said distributed resource units occupied by said secondary broadcast control channel through blind detection. For example, in a specific implementation process, said terminal can obtain said configuration information of said frequency partition in advance and determine the location of said control channel in accordance with said configuration information, then obtain a fixed or predetermined number of distributed resource units occupied by said primary broadcast control channel through blind detection and obtain the number of said distributed resource units occupied by said secondary broadcast control channel. Said primary broadcast control channel occupies a determined number of resources or the number of occupied resources can be obtained through blind detection; and the number of resources occupied by said secondary broadcast control channel is indicated via said primary broadcast control channel. For example, the amount of information sent by said primary broadcast control channel is definite, and one of determined methods for modulating coding may be adopted, thus the number of occupied resources is related with an actually adopted modulating coding method, but the information of the number of said resources can be obtained through blind detection and a possible modulating coding method as long as the start position of said primary broadcast control channel has been determined.

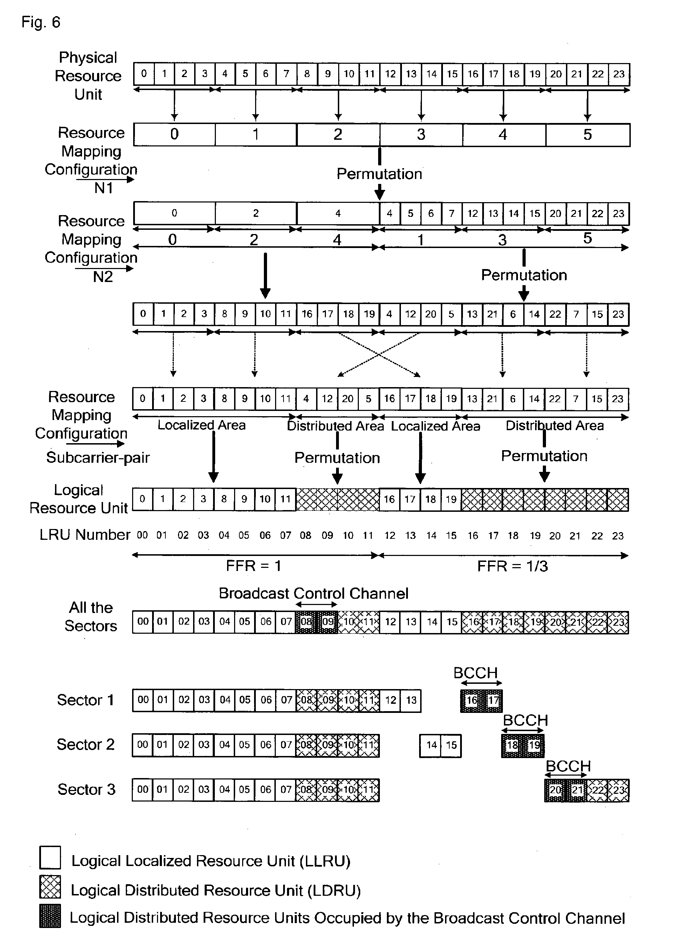

Furthermore, the bandwidth occupied by said primary broadcast control channel is required to meet one of the following requirements: said bandwidth occupied by said primary broadcast control channel is smaller than or equal to the minimal system bandwidth, and the frequency difference between any two subcarriers occupied by said primary broadcast control channel is smaller than or equal to said minimal system bandwidth. For example, as shown in Fig. 6, Fig. 7 and Fig. 8, the bandwidth occupied by said broadcast control channel is smaller than the minimal system bandwidth (5MHz), therefore, the bandwidth occupied by said primary broadcast control channel must be smaller than said minimal system bandwidth (5MHz).

In addition, said distributed resource units occupied by said primary broadcast control channel are adjacent or nonadjacent to said distributed resource units occupied by said secondary broadcast control channel, wherein if said distributed resource units occupied by said primary broadcast control channel are nonadjacent to said distributed resource units occupied by said secondary broadcast control channel, then the location information of said distributed resource units occupied by said secondary broadcast control channel can be indicated via the primary broadcast control channel.

The present invention provides a resource mapping method for a control channel in the OFDMA system, by locating a broadcast control channel in distributed resource units of a plurality of frequency partitions, solving the problems of resource location occupied by a broadcast control channel and the manner thereof, improving the performance of the broadcast control channel, enabling the control channel to meet various requirements in related technologies, such as a low bit error rate, resource mapping and interference suppression in the OFDMA system and the like, simplifying the process of a terminal identifying the control channel and ensuring the spectrum efficiency of a wireless communication system based on the OFDMA technology.

The method in Method Embodiment 2 will be described hereinafter in combination with Examples 2, 3 and 4.

### Example 2

Fig. 6 illustrates a resource mapping process of a broadcast control channel which occupies two frequency partitions in the OFDMA/5MHz system of the present invention. The resource mapping process in Example 1 is similar to that in Fig. 4, and the diffrence is that one frequency partition is included in Fig. 4 while two frequency partitions are included in Fig. 6.

As shown in Fig. 6, a frequency partition 0 and a frequency partition 1 are included, wherein a fractional frequency reuse factor of said frequency partition 0 is 1, and a fractional frequency reuse factor of said frequency partition 1 is 1/3. Said frequency partition 0 includes 2 subbands, 4 minibands and 12 physical resource units in all, said frequency partition 1 includes 1 subband, 8 minibands and 12 physical resource units in all. In said frequency partition 0, the first 8 physical resource units are contiguous resource units, the last 4 physical resource units are distributed resource units, while in said frequency partition 1, the first 4 physical resource units are contiguous resource units, the last 8 are distributed resource units. There must exist frequency partitions of which fractional frequency reuse factors are 1 or 1/3 in a plurality of frequency partitions to which resources are mapped.

One frequency partition has to be selected between said frequency partition 0 and said frequency partition 1 because said broadcast control channel can be only located in such frequency partitions of which fractional frequency reuse factors are 1 or 1/3, i.e., said broadcast control channel cannot be simultaneously sent in said frequency partition 0 and said frequency partition 1, that is to say, when a plurality of frequency partitions exist, said broadcast control channel cannot simultaneously appear in such frequency partitions of which fractional frequency reuse factors are 1 and 1/3.

### Example 3

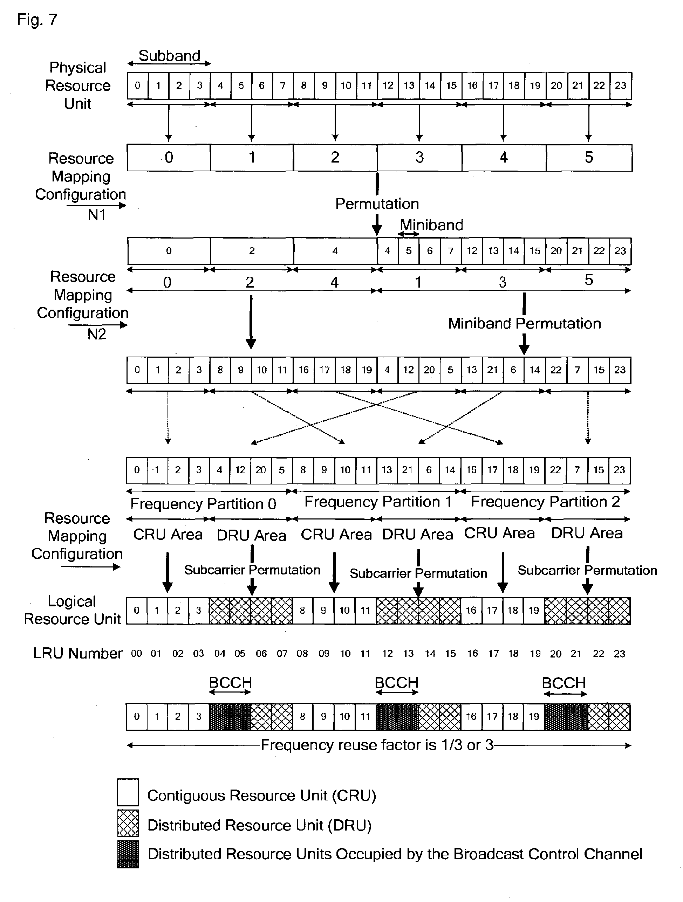

Fig. 7 illustrates a resource mapping process of a broadcast control channel which occupies three frequency partitions in the OFDMA/5MHz system of the present invention, the resource mapping process in Example 2 is similar to that in Example 1, and the difference is that two frequency partitions are included in Fig. 6 while three frequency partitions are included in Fig. 7.

As shown in Fig. 7, a frequency partition 0, a frequency partition 1 and frequency partition 2 are included, wherein a fractional frequency reuse factor of said frequency partition 0 is 1, a fractional frequency reuse factor of said frequency partitions 1 is 2/3, and a fractional frequency reuse factor of said frequency partition 2 is 1/3. Therefore, a broadcast control channel can be designed based on said frequency partition 0 and said frequency partition 2, and since frequency partitions of which fractional frequency reuse factors are 1 and 1/3 exist, and the design for said broadcast control channel is similar to that in Fig. 5, so it is unnecessary to give more details here.

### Example 4

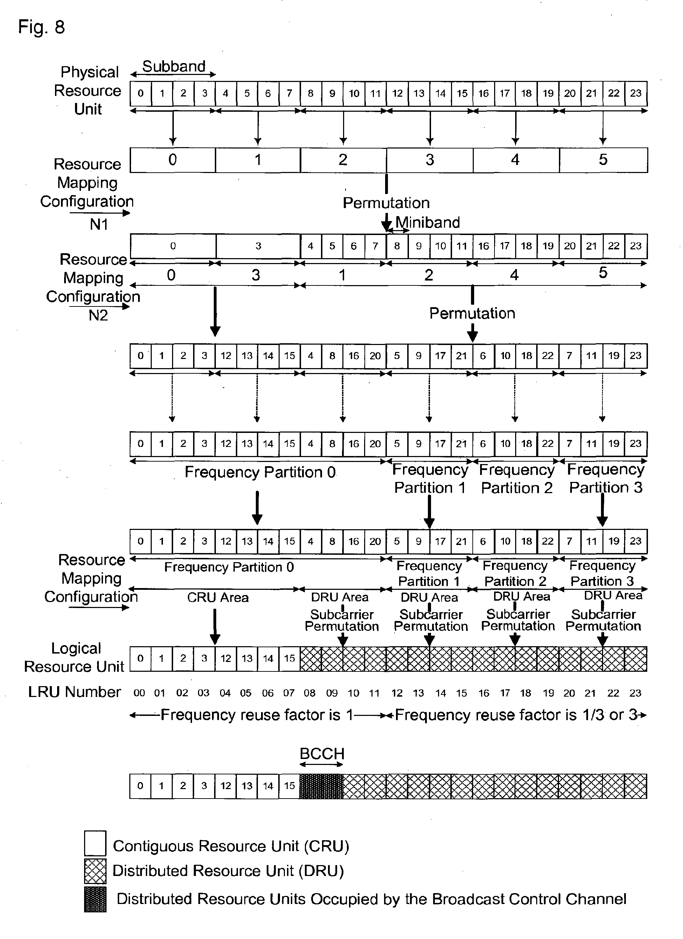

Fig. 8 describes a resource mapping process of a broadcast control channel which occupies four frequency partitions in the OFDMA/5MHz system of the present invention, wherein the resource mapping process in Example 3 is similar to that in Example 2, and the difference is that three frequency partitions are included in Fig. 7, while four frequency partitions are included in Fig. 8.

As shown in Fig. 8, a frequency partition 0, a frequency partition 1, a frequency partition 2 and a frequency partition 3 are included, wherein a fractional frequency reuse factor of said frequency partition 0 is 1, and fractional frequency reuse factors of said frequency partition 1, said frequency partition 2 and said frequency partition 3 are respectively 2/3. A broadcast control channel thus can only occupy distributed resource units in said frequency partition 0 because there is no frequency partition of which a fractional frequency reuse factor is 1/3.

### Method Embodiment 3

In accordance with the embodiment of the present invention, a resource mapping method for a control channel is provided.

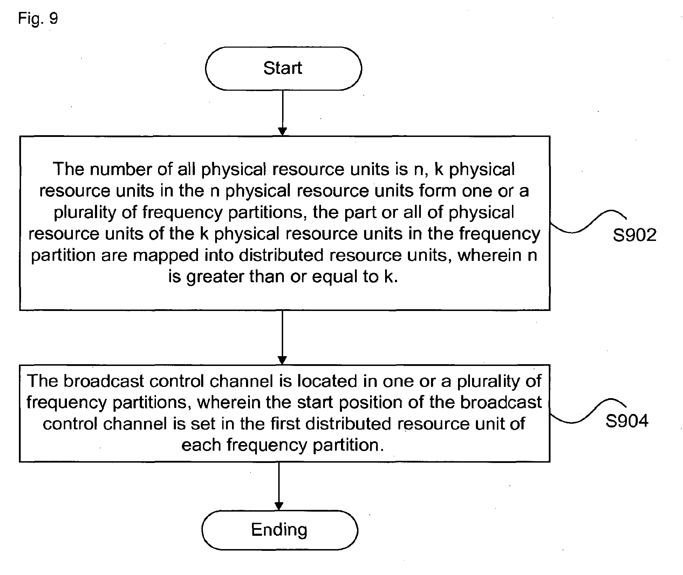

Fig. 9 is a flowchart illustrating the resource mapping method for a control channel in accordance with Embodiment 2 of the present invention, and as shown in Fig. 9, the method comprises the following steps (from S902 to S902).

In S902, the number of all physical resource units is n, k physical resource units in said n physical resource units form a frequency partition or a plurality of frequency partitions, and a fractional frequency reuse factor(s) of said frequency partition(s) can be 1, 1/3 or 3; the part or all of physical resource units in said k physical resource units in said frequency partition(s) are mapped into distributed resource units, and the rest (n-k) physical resource units are mapped into contiguous physical resource units, wherein said n is greater than or equal to said k, and said n is determined by at least one of the following parameters: system bandwidth and a multi-carrier frequency configuration; said k can be a fixed value or can be determined by at least one of the following parameters: system bandwidth and a multi-carrier frequency configuration.

In S904, said broadcast control channel is located in one or a plurality of frequency partitions, wherein the start position of said broadcast control channel is located in the first distributed resource unit(s) of said frequency partition(s), and physical bandwidth occupied by said control channel is smaller than or equal to minimal system bandwidth.

Said control channel can only comprise a primary broadcast control channel or comprise a primary broadcast control channel and a secondary broadcast control channel, if said control channel only comprises a primary broadcast control channel, then distributed resource units in said frequency partition(s) are only used for bearing said primary broadcast control channel, and if said control channel comprises a primary broadcast control channel and a secondary broadcast control channel, then distributed resource units in said frequency partition(s) are used for bearing said primary broadcast control channel and said secondary broadcast control channel. Wherein said primary broadcast control channel occupies a fixed or predetermined number of distributed resource units and indicates the number of the distributed resource units occupied by said secondary broadcast control channel.

Wherein said primary broadcast control channel occupies a fixed or predetermined number of distributed resource units and indicates the number of said distributed resource units occupied by said secondary broadcast control channel, wherein said distributed resource unit occupied by said primary broadcast control channel can be obtained by adopting one of the following methods: said primary broadcast control channel occupies a fixed number of distributed resource units, or said terminal obtains the number of said distributed resource units occupied by said primary broadcast control channel through blind detection; said distributed resource units occupied by said secondary broadcast control channel can be obtained by adopting one of the following methods: said primary broadcast control channel indicates the number of said distributed resource units occupied by said secondary broadcast control channel, and said terminal obtains the number of said distributed resource units occupied by said secondary broadcast control channel through blind detection. For example, in a specific implementation process, said terminal can obtain the configuration information of said frequency partition(s) in advance and determine the location of said control channel in accordance with said configuration information, then obtain a fixed or predetermined number of distributed resource units occupied by said primary broadcast control channel through blind detection and obtain the number of said distributed resource units occupied by said secondary broadcast control channel. Said primary broadcast control channel occupies a determined number of resources, or the number of occupied resources can be obtained through blind detection; and the number of resources occupied by said secondary broadcast control channel can be indicated via said primary broadcast control channel. For example, the amount of information sent by said primary broadcast control channel is definite, and one of determined methods for modulating coding may be adopted, thus the number of occupied resources is related with an actually adopted modulating coding method, but information of the number of said resources can be obtained through blind detection and a possible modulating coding method as long as the start position of the primary broadcast control channel has been determined.

Furthermore, bandwidth occupied by said primary broadcast control channel is required to meet one of the following requirements: said bandwidth occupied by said primary broadcast control channel is smaller than or equal to minimal system bandwidth, and the frequency difference between any two subcarriers occupied by said primary broadcast control channel is smaller than or equal to said minimal system bandwidth.

In addition, resources besides the resources used for transmitting said primary broadcast control channel and/or said secondary broadcast control channel in said frequency partition(s) can be utilized for data transmission.

For example, the OFDMA system comprises n physical resource units, wherein k physical resource units are extracted from said n physical resource units and used for transmitting said broadcast control channel. Said k physical resource units form a frequency partition, and normal resource mapping is performed to the rest (n-k) physical resource units. Said terminal obtains configuration information of said frequency partition in advance and determines the location of said control channel in accordance with said configuration information, then obtains a fixed or predetermined number of distributed resource units occupied by said primary broadcast control channel and further obtains the number of distributed resource units occupied by said secondary broadcast control channel.

Said k physical resource units can be selected in accordance with one of the following methods: contiguously extracting k physical resource units from one side of said n physical resource units; contiguously extracting k physical resource units from the middle of said n physical resource units; and contiguously extracting k physical resource units from both sides of said n physical resource units.

For example, minimal system bandwidth is assumed to be 5MHz, a 10MHz system may comprise 48 resource units, i.e., n=48, if 24 physical resource units are contiguously extracted from the middle of said 48 resource units, then the bandwidth thereof is 5MHz, i.e., k=24, said 24 extracted physical resource units are [12, 13, 14, ..., 35], and the rest physical resource units are [0, 1, 2, ...9, 10, 11] and [36, 37, 38, ..., 45, 46, 47].

The method shown in Method Embodiment 3 of the present invention will be described in detail hereinafter in combination with Examples 5 and 6.

### Example 5

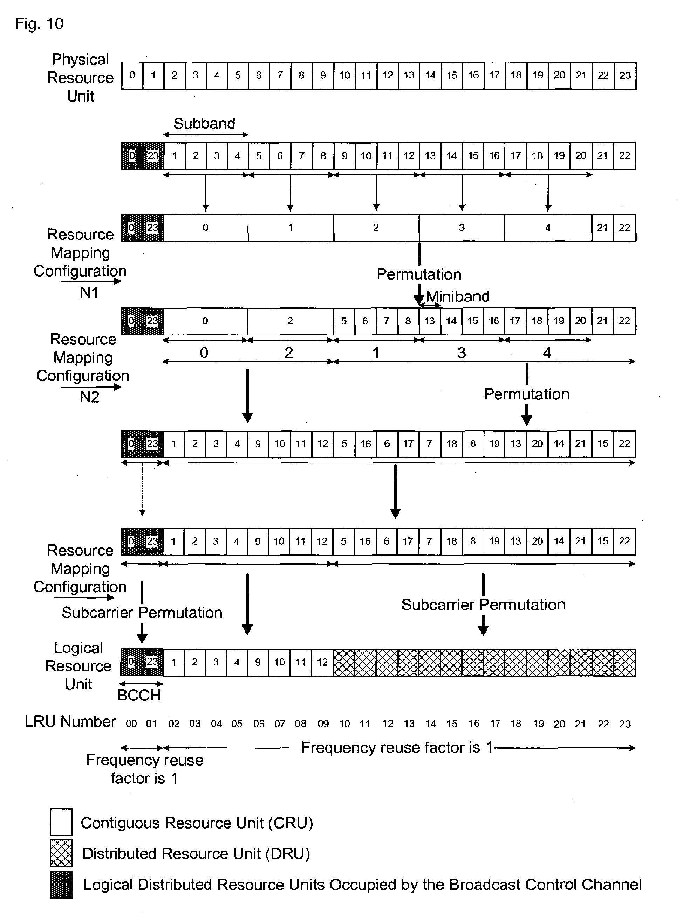

Fig. 10 illustrates a mapping process of the broadcast control channel occupying predetermined resource units in the OFDMA/5MHz system in accordance with the method embodiment of the present invention, as shown in Fig. 10, the number of FFT points of the 5MHz system is 512, the number of available subcarriers in a subframe is 432, the system is divided into 24 physical resource units in all, and the size of each physical resource unit is 18 × 6.

The specific mapping process is as follows: firstly, a certain number of physical resource units are extracted from said 24 physical resource units, the specific number depends on the data quantity required to be sent by said broadcast control channel, for example, a physical resource unit 0 and a physical resource unit 23 are extracted, subcarrier permutation is performed to said two resource units to obtain 2 distributed resource units which are used for bearing said broadcast control channel, and the resource mapping shown in Example 1 to Example 3 is performed to the rest 22 physical resource units.

### Example 6

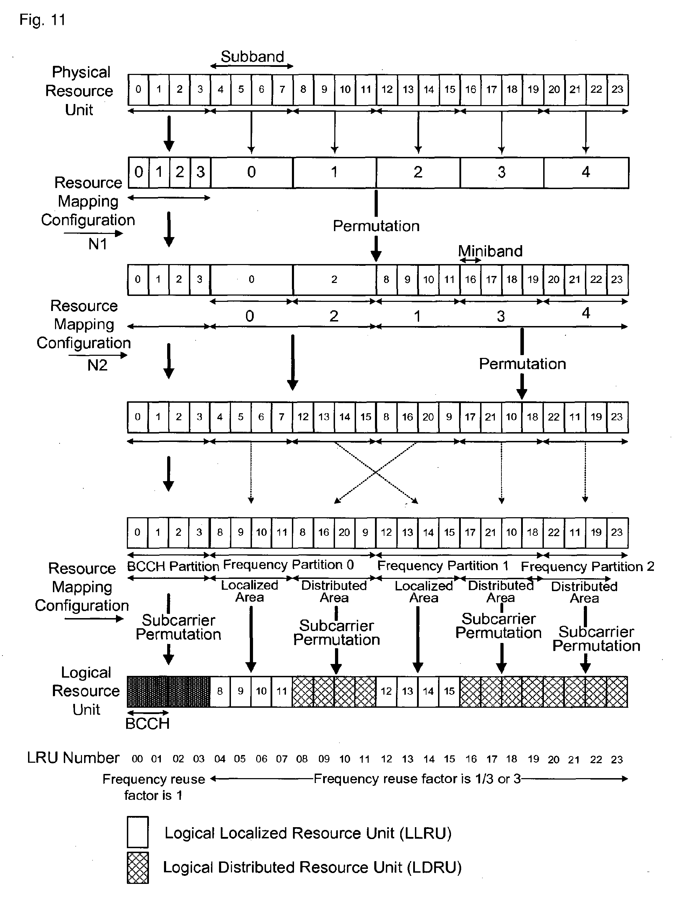

Fig. 11 illustrates a mapping process of the broadcast control channel occupying a predetermined partition in the OFDMA/5MHz system, as shown in Fig. 11, the number of FFT points of the 5MHz system is 512, the number of available subcarriers in a subframe is 432, the system is divided into 24 physical resource units in all, and the size of each physical resource unit is 18 × 6.

The specific mapping process is as follows: firstly, a certain number of physical resource units are extracted from said 24 physical resource units, the specific number depends on the data quantity required to be sent by said broadcast control channel, the principle of extraction is that the rest physical resource units must be contiguous, and the method is extracting resource units from both sides or one side, for example, extracting in sequence 4 contiguous physical resource units 0, 1, 2 and 3 from the start side, said 4 physical resource units form a partition used for bearing said control channel, then subcarrier permutation is performed to said 4 physical resource units in said partition to obtain 4 distributed resource units, and the resource mapping shown in Example 1 to Example 3 is performed to the rest 20 physical resource units.

### Method Embodiment 4

In accordance with the embodiment of the present invention, a resource mapping method is provided.

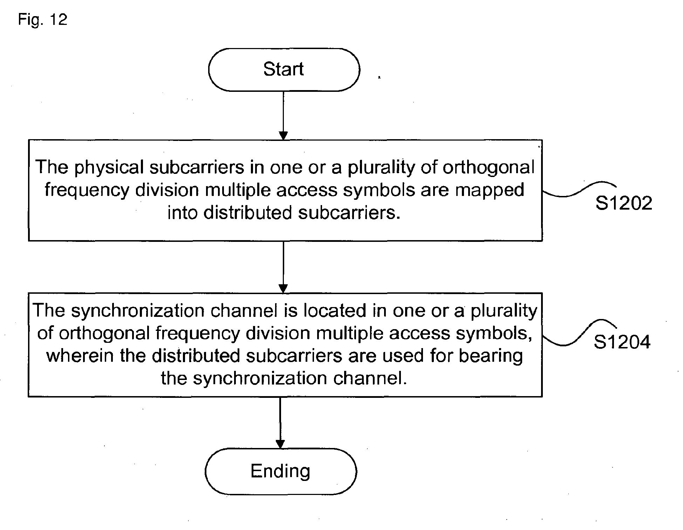

Fig. 12 is a flowchart illustrating a resource mapping method shown in accordance with Method Embodiment 4 of the present invention, and as shown in Fig. 12, the method comprises the following steps (from S1202 to S1204).

In S1202, physical resource units located in one or a plurality of orthogonal frequency division multiple access symbols are mapped into distributed subcarriers, wherein said one or a plurality of orthogonal frequency division multiple access symbols are respectively the first orthogonal frequency division multiple access symbols of corresponding subframes, specifically, the physical subcarriers in orthogonal frequency division multiple access symbols can be permuted into distributed subcarriers by reference to a permutation unit, wherein said permutation unit can be a subcarrier or a carrier pair, and one carrier pair comprises two physically contiguous subcarriers, wherein said distributed subcarriers comprise fully discontiguous subcarriers or partially contiguous subcarriers, and said fully discontiguous subcarriers mean that any two distributed subcarriers are physically discontiguous.

In S1204, a synchronization channel is arranged in one or a plurality of orthogonal frequency division multiple access symbols, wherein said distributed subcarrier is used for bearing the synchronization channel.

The above synchronization channel comprises a primary synchronization channel and a secondary synchronization channel, wherein bandwidth occupied by said primary synchronization channel is smaller than or equal to a minimal system bandwidth, and specifically, the frequency difference between any two subcarriers is smaller than or equal to a minimal system bandwidth; the bandwidth occupied by said secondary synchronization channel is smaller than or equal to the minimal system bandwidth, and said secondary synchronization channel also can occupy the full system bandwidth.

In addition, a fractional frequency reuse factor corresponding to subcarriers occupied by said primary synchronization channel can be 1, and a fractional frequency reuse factor corresponding to subcarriers occupied by said secondary synchronization channel can be 1/3 or 3.

The following Examples 7 and 8 respectively aim to serve as the further description of the method shown in Method Embodiment 4 of the present invention.

### Example 7

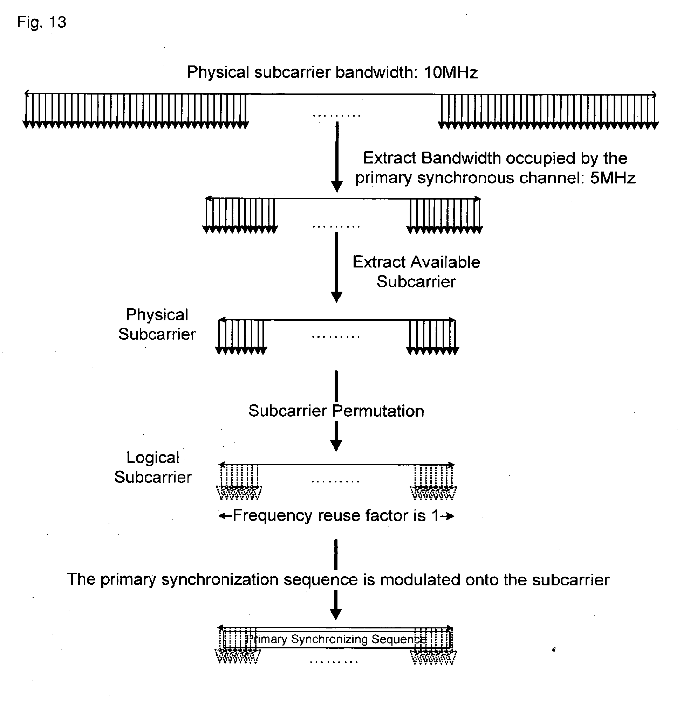

Fig. 13 is a diagram illustrating a mapping process of the primary synchronization channel in the OFDMA/10MHz system in accordance with the method embodiment of the present invention, and as shown in Fig. 13, the number of FFT points of the 10MHz system is 1024.

The specific mapping process is as follows: firstly, extracting subcarriers form the intermediate 5MHz of the 10MHz bandwidth, i.e., extracting 512 subcarriers, wherein the number of available subcarriers in said 512 subcarriers is 432; secondly, performing subcarrier permutation to said 432 available subcarriers by reference to a permutation unit that is a physical subcarrier or a subcarrier pair, and mapping said available subcarriers into distributed subcarriers, wherein fractional frequency reuse factors corresponding to said distributed subcarriers are 1 respectively; lastly, bearing said primary synchronization channel by using said distributed subcarriers, i.e., a primary synchronization sequence is modulated onto said distributed subcarriers for transmission.

### Example 8

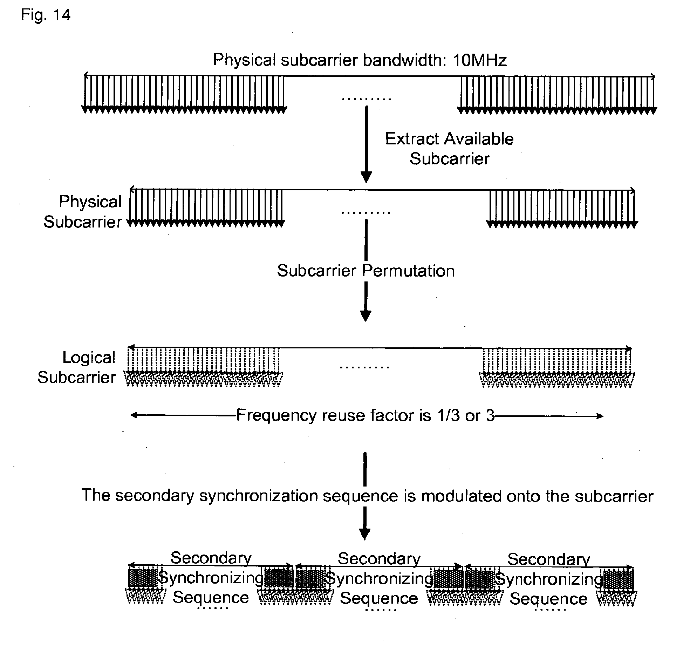

Fig. 14 is a diagram illustrating a mapping process of the secondary synchronization channel in the OFDMA/10MHz system in accordance with the method embodiment of the present invention, and as shown in Fig. 14, the number of FFT points of the 10MHz system is 1024.

The specific mapping process is as follows: firstly, extracting available subcarriers from the 10MHz bandwidth, for example, removing guard subcarriers and direct current subcarriers to obtain available subcarriers, assuming that the number of said available subcarriers is 864; secondly, performing subcarrier permutation to said 864 available subcarriers, and mapping said available subcarriers into distributed subcarriers by taking a physical subcarrier or a subcarrier pair as a permutation unit, wherein fractional frequency reuse factors corresponding to said distributed subcarriers are respectively 1/3 or 3; lastly, bearing said secondary synchronization channel by using said distributed subcarriers, i.e., a secondary synchronization sequence is modulated onto said distributed subcarriers for transmission.

As above, by means of the resource mapping methods and/or devices for control channels provided by the present invention, the present invention provides resource mapping methods for control channels in an OFDMA system, thereby solving the problems of the resource location occupied by a broadcast control channel and the manner thereof, enabling the broadcast control channel to meet various requirements in related technologies, such as a low bit error rate, resource mapping and interference suppression in the OFDMA system and so on, improving the performance of the control channel, simplifying the process for a terminal identifying the control channel, and ensuring the spectrum efficiency of a wireless communication system based on the OFDMA technology.

The above are just the preferred embodiments rather than restrictions to the present invention, to those skilled in the art, without departing from the spirit and principle of the present invention, various modifications and changes can be made to the present invention; any modification, equivalent substitute and improvement should be included within the protection scope of the present invention.

## Claims

1. A resource mapping method for a control channel, **characterized in that** it comprises:
(S902) the number of all physical resource units being n, k physical resource units in the n physical resource units forming one or a plurality of frequency partitions, and mapping the part or all of physical resource units of said k physical resource units of said frequency partition(s) into distributed resource units, wherein n is greater than or equal to k;
(S904) locating a broadcast control channel in said one or a plurality of frequency partitions,
wherein a fractional frequency reuse factor corresponding to said frequency partition is 1, 1/3 or 3; and
when the fractional frequency reuse factor corresponding to said frequency partition is 1, a start position of said broadcast control channel is positioned in a first distributed resource unit of said frequency partition; when the fractional frequency reuse factor of the frequency partition is 1/3 or 3, the start position of said broadcast control channel is positioned in a first distributed resource unit of each section of said frequency partition.

2. The method in accordance with Claim 1, wherein said n is determined by at least one of the following parameters: a system bandwidth and a multi-carrier frequency configuration.

3. The method in accordance with Claim 1, wherein said k physical resource units are selected in accordance with one of the following methods: contiguously extracting k physical resource units from one side of said n physical resource units; contiguously extracting k physical resource units from the middle of said n physical resource units; and contiguously extracting k physical resource units from both sides of said n physical resource units.

4. The method in accordance with Claim1, wherein
said k is a fixed value; or
said k is determined by at least one of the following parameters: a system bandwidth and a multi-carrier frequency configuration.

5. The method in accordance with any of Claims 1 to 4, wherein said broadcast control channel comprises a primary broadcast control channel and/or a secondary broadcast control channel.

6. The method in accordance with Claim 5, wherein bandwidth occupied by said primary broadcast control channel is smaller than or equal to a minimal system bandwidth; or the frequency difference between any two subcarriers occupied by said primary broadcast control channel is smaller than or equal to the minimal system bandwidth.

7. The method in accordance with Claim 5, further comprising:
said primary broadcast control channel occupying a fixed number of distributed resource units; or
a terminal obtaining the number of distributed resource units occupied by said primary broadcast control channel through blind detection.

8. The method in accordance with Claim 5, further comprising:
said primary broadcast control channel indicating the number of the distributed resource units occupied by said secondary broadcast control channel; or
a terminal obtaining the number of distributed resource units occupied by said secondary broadcast control channel through blind detection.

9. The method in accordance with Claim 5, further comprising:
the distributed resource units occupied by said primary broadcast control channel being adjacent or nonadjacent to the distributed resource units occupied by said secondary broadcast control channel;
wherein if said distributed resource units occupied by said primary broadcast control channel are nonadjacent to said distributed resource units occupied by said secondary broadcast control channel, location information of said distributed resource units occupied by said secondary broadcast control channel is indicated via said primary broadcast control channel.

10. The method in accordance with Claim 5, further comprising:
utilizing the resources which are not used for transmitting said primary broadcast control channel and/or said secondary broadcast control channel in said frequency partition to transmit data; or
utilizing the resources which are used for transmitting said primary broadcast control channel and/or said secondary broadcast control channel in said frequency partition to transmit data.

11. The method in accordance with Claim 5, further comprising:
said primary broadcast control channel indicating the number of and/or the location of distributed resource units occupied by said primary broadcast control channel; or
a terminal obtaining the number of and/or the location of distributed resource units occupied by said secondary broadcast control channel through blind detection.

12. The method in accordance with Claim 5, wherein configuration information of said multiple frequency partitions is definite, and the location of said broadcast control channel is determined in accordance with said configuration information, wherein said configuration information includes at least one of the following: a number of said frequency partitions, a size of each frequency partition, a number of subbands in each frequency partition, a number of minibands in each frequency partition, a number of distributed resource units in each frequency partition and the number of contiguous resource units in each frequency partition.

## Patentansprüche

1. Ressourcenzuweisungsverfahren für einen Steuerungskanal, **dadurch gekennzeichnet, dass** es aufweist:
(S902) die Anzahl aller physikalischer Ressourceneinheiten ist n, wobei k physikalische Ressourceneinheiten in den n physikalischen Ressourceneinheiten einen oder eine Vielzahl von Frequenzteilbereichen bilden, und Zuweisen des Teils aller physikalischer Ressourceneinheiten der k physikalischen Ressourceneinheiten des Frequenzteilbereichs bzw. der Frequenzteilbereiche zu verteilten Ressourceneinheiten, wobei n größer oder gleich k ist,
(S904) Lokalisieren eines Rundsendesignalisierungskanals (broadcast control channel) in dem einen Frequenzteilbereich bzw. der Vielzahl von Frequenzteilbereichen,
wobei ein geteilter Frequenzwiederholfaktor, der dem Frequenzteilbereich entspricht, 1, 1/3 oder 3 ist, und,
wenn der geteilte Frequenzwiederholfaktor, der dem Frequenzteilbereich entspricht, 1 ist, eine Startposition des Rundsendesignalisierungskanals in einer ersten verteilten Ressourceneinheit des Frequenzteilbereichs angeordnet wird, und, wenn der geteilte Frequenzwiederholfaktor des Frequenzteilbereichs 1/3 oder 3 ist, die Startposition des Rundsendesignalisierungskanals in einer ersten verteilten Ressourceneinheit jedes Abschnitts des Frequenzteilbereichs angeordnet wird.

2. Verfahren nach Anspruch 1, bei dem n durch mindestens einen der folgenden Parameter bestimmt wird: eine Systembandbreite und eine Mehrträgerfrequenzkonfiguration.

3. Verfahren nach Anspruch 1, bei dem die k physikalischen Ressourceneinheiten gemäß einem der folgenden Verfahren ausgewählt werden: fortlaufendes Extrahieren von k physikalischen Ressourceneinheiten aus einer Seite der n physikalischen Ressourceneinheiten, fortlaufendes Extrahieren von k physikalischen Ressourceneinheiten aus der Mitte der n physikalischen Ressourceneinheiten und fortlaufendes Extrahieren von k physikalischen Ressourceneinheiten aus beiden Seiten der n physikalischen Ressourceneinheiten.

4. Verfahren nach Anspruch 1, bei dem
das k ein fester Wert ist oder
das k durch mindestens einen der folgenden Parameter bestimmt wird: eine Systembandbreite und eine Mehrträgerfrequenzkonfiguration.

5. Verfahren nach einem der Ansprüche 1 bis 4, bei dem der Rundsendesignalisierungskanal einen primären Rundsendesignalisierungskanal und/oder einen sekundären Rundsendesignalisierungskanal aufweist.

6. Verfahren nach Anspruch 5, bei dem Bandbreite, die durch den primären Rundsendesignalisierungskanal belegt wird, kleiner oder gleich einer minimalen Systembandbreite ist oder der Frequenzunterschied zwischen jeglichen zwei Zwischenträgern, die durch den primären Rundsendesignalisierungskanal belegt werden, kleiner oder gleich der minimalen Systembandbreite ist.

7. Verfahren nach Anspruch 5, das ferner aufweist,
dass der primäre Rundsendesignalisierungskanal eine feste Anzahl verteilter Ressourceneinheiten belegt oder
dass ein Terminal die Anzahl verteilter Ressourceneinheiten, die durch den primären Rundsendesignalisierungskanal belegt werden, durch Blinddetektion erhält.

8. Verfahren nach Anspruch 5, das ferner aufweist,
dass der primäre Rundsendesignalisierungskanal die Anzahl der verteilten Ressourceneinheiten, die durch den sekundären Rundsendesignalisierungskanal belegt werden, angibt oder
dass ein Terminal die Anzahl verteilter Ressourceneinheiten, die durch den sekundären Rundsendesignalisierungskanal belegt werden, durch Blinddetektion erhält.

9. Verfahren nach Anspruch 5, das ferner aufweist,
dass die verteilten Ressourceneinheiten, die durch den primären Rundsendesignalisierungskanal belegt werden, benachbart oder nicht benachbart zu den verteilten Ressourceneinheiten sind, die durch den sekundären Rundsendesignalisierungskanal belegt werden,
wobei dann, wenn die verteilten Ressourceneinheiten, die durch den primären Rundsendesignalisierungskanal belegt werden, nicht benachbart zu den verteilten Ressourceneinheiten sind, die durch den sekundären Rundsendesignalisierungskanal belegt werden, Lokalisierungsinformation der verteilten Ressourceneinheiten, die durch den sekundären Rundsendesignalisierungskanal belegt werden, über den primären Rundsendesignalisierungskanal angegeben werden.

10. Verfahren nach Anspruch 5, das ferner aufweist,
dass die Ressourcen, die nicht zum Übertragen des primären Rundsendesignalisierungskanals und/oder des sekundären Rundsendesignalisierungskanals in dem Frequenzteilbereich verwendet werden, verwendet werden, um Daten zu übertragen, oder
dass die Ressourcen, die zum Übertragen des primären Rundsendesignalisierungskanals und/oder des sekundären Rundsendesignalisierungskanals in dem Frequenzteilbereich verwendet werden, verwendet werden, um Daten zu übertragen.

11. Verfahren nach Anspruch 5, das ferner aufweist,
dass der primäre Rundsendesignalisierungskanal die Anzahl und/oder den Ort verteilter Ressourceneinheiten angibt, die durch den primären Rundsendesignalisierungskanal belegt werden, oder
dass ein Terminal die Anzahl und/oder den Ort verteilter Ressourceneinheiten, die durch den sekundären Rundsendesignalisierungskanal belegt werden, durch Blinddetektion erhält.

12. Verfahren nach Anspruch 5, bei dem Konfigurationsinformation der mehreren Frequenzteilbereiche definitiv ist und der Ort des Rundsendesignalisierungskanals gemäß der Konfigurationsinformation bestimmt wird, wobei die Konfigurationsinformation mindestens eines von dem Folgenden aufweist: eine Anzahl der Frequenzteilbereiche, eine Größe jedes Frequenzteilbereichs, eine Anzahl von Teilbändern in jedem Frequenzteilbereich, eine Anzahl von Minibändern in jedem Frequenzteilbereich, eine Anzahl verteilter Ressourceneinheiten in jedem Frequenzteilbereich und die Anzahl zusammenhängender Ressourceneinheiten in jedem Frequenzteilbereich.

## Revendications

1. Procédé de mappage de ressources d'un canal de commande, **caractérisé en ce qu'**il comprend :
(S902) le nombre de toutes les unités de ressources physiques étant égal à n, k unités de ressources physiques dans les n unités de ressources physiques formant une ou une pluralité de partitions de fréquences, et mappant une partie ou toutes les unités de ressources physiques desdites k unités de ressource physiques desdites partitions de fréquences dans des unités de ressources distribuées, dans lequel n est supérieur ou égal à k ;
(S904) la localisation d'un canal de commande de diffusion dans ladite partition de fréquences ou ladite pluralité de partitions de fréquences ;
dans lequel le facteur de réutilisation de fréquence fractionnaire qui correspond à ladite partition de fréquence est égal à 1, à 1 / 3 ou à 3 ; et
lorsque le facteur de réutilisation de fréquence fractionnaire qui correspond à ladite partition de fréquence est égal à 1, une position de début dudit canal de commande de diffusion est positionnée dans une première unité de ressource distribuée de ladite partition de fréquence ; lorsque le facteur de réutilisation de fréquence fractionnaire de la partition de fréquence est égal à 1/3 ou à 3, la position de début dudit canal de commande de diffusion est positionnée dans une première unité de ressource distribuée de chaque section de ladite partition de fréquence.

2. Procédé selon la revendication 1, dans lequel ledit n est déterminé par l'un au moins des paramètres suivants : une largeur de bande de système et une configuration de fréquence multiporteuse.

3. Procédé selon la revendication 1, dans lequel lesdites k unités de ressources physiques sont sélectionnées selon l'un des procédés suivants : extraire de manière contigüe k unités de ressources physiques à partir d'un côté desdites n unités de ressources physiques ; extraire de manière contigüe k unités de ressources physiques à partir du milieu desdites n unités de ressources physiques ; et extraire de manière contigüe k unités de ressources physiques à partir des deux côtés desdites n unités de ressources physiques.

4. Procédé selon la revendication 1, dans lequel :
ledit k est une valeur fixe ; ou
ledit k est déterminé par l'un au moins des paramètres suivants : une largeur de bande de système et une configuration de fréquence multiporteuse.

5. Procédé selon l'une quelconque des revendications 1 à 4, dans lequel ledit canal de commande de diffusion comprend un canal de commande de diffusion primaire et/ou un canal de commande de diffusion secondaire.

6. Procédé selon la revendication 5, dans lequel la largeur de bande occupée par ledit canal de commande de diffusion primaire est plus petite ou égale à une largeur de bande de système minimale ; ou la différence de fréquence entre deux porteuses secondaires occupées par ledit canal de commande de diffusion primaire est plus petite ou égale à la largeur de bande de système minimale.

7. Procédé selon la revendication 5, comprenant en outre les étapes suivantes :
ledit canal de commande de diffusion primaire occupe un nombre fixe d'unités de ressources distribuées ; ou
un terminal obtient le nombre d'unités de ressources distribuées occupées par ledit canal de commande de diffusion primaire par l'intermédiaire d'une détection en aveugle.

8. Procédé selon la revendication 5, comprenant en outre les étapes suivantes :
ledit canal de commande de diffusion primaire indique le nombre d'unités de ressources distribuées occupées par ledit canal de commande de diffusion secondaire ; ou
un terminal obtient le nombre d'unités de ressources distribuées occupées par ledit canal de commande de diffusion secondaire par l'intermédiaire d'une détection en aveugle.

9. Procédé selon la revendication 5, comprenant en outre :
les unités de ressources distribuées occupées par ledit canal de commande de diffusion primaire, étant adjacentes ou non adjacentes par rapport aux unités de ressources distribuées occupées par ledit canal de commande de diffusion secondaire ;
dans lequel, si lesdites unités de ressources distribuées occupées par ledit canal de commande de diffusion primaire, sont non adjacentes auxdites unités de ressources distribuées occupées par ledit canal de commande de diffusion secondaire, les informations d'emplacement desdites unités de ressources distribuées occupées par ledit canal de commande de diffusion secondaire, sont indiquées par l'intermédiaire dudit canal de commande de diffusion primaire.

10. Procédé selon la revendication 5, comprenant en outre les étapes consistant à :
utiliser les ressources qui ne sont pas utilisées de façon à transmettre ledit canal de commande de diffusion primaire et/ou ledit canal de commande de diffusion secondaire dans ladite partition de fréquence de manière à transmettre des données ; ou
utiliser les ressources qui sont utilisées de façon à transmettre ledit canal de commande de diffusion primaire et / ou ledit canal de commande de diffusion secondaire dans ladite partition de fréquence de manière à transmettre des données.

11. Procédé selon la revendication 5, comprenant en outre :
ledit canal de commande de diffusion primaire indique le nombre et/ou l'emplacement des unités de ressources distribuées occupées par ledit canal de commande de diffusion primaire ; ou
un terminal qui obtient le nombre et/ou l'emplacement des unités de ressources distribuées occupées par ledit canal de commande de diffusion secondaire par l'intermédiaire d'une détection en aveugle.

12. Procédé selon la revendication 5, dans lequel les informations de configuration desdites multiples partitions de fréquence sont définies, et l'emplacement dudit canal de commande de diffusion est déterminé selon lesdites informations de configuration, dans lequel lesdites informations de configuration comprennent au moins une des informations suivantes : le nombre desdites partitions de fréquence, la taille de chaque partition de fréquence, le nombre de bandes secondaires dans chaque partition de fréquence, le nombre de mini-bandes dans chaque partition de fréquence, le nombre d'unités de ressources distribuées dans chaque partition de fréquence et le nombre d'unités de ressources contiguës dans chaque partition de fréquence.
